# EUROPÄISCHE PATENTANMELDUNG

(11) **EP 1 005 256 A2**
(43) Veröffentlichungstag der Anmeldung: **31.05.2000**
(21) Anmeldenummer: 99123340.4
(22) Anmeldetag: 23.11.1999
(51) Int. Cl.: H05B 39/04

(54) **Spannungswandler sowie Flurförderzeug mit Gleichspannungsversorgung**

(30) Priorität: 25.11.1998 DE 19854416
(71) Anmelder: STILL GMBH, D-22113 Hamburg (DE)
(72) Erfinder: Häcker, Berthold, Dipl.-Ing., 63773 Goldbach (DE); Arping, Franz-Josef, Dipl.-Ing., 22455 Hamburg (DE); Grothe, Wolfgang Heinrich, Dipl.-Ing., 21244 Buchholz (DE)
(74) Vertreter: Kasseckert, Rainer

(57) **Zusammenfassung**

Die Erfindung betrifft ein Flurförderzeug mit einer Gleichspannungsversorgung und zumindest einem in einem Gehäuse (1) befindlichen elektrischen Leuchtmittel (2), wobei die Versorgungsspannung (3) größer als die Nennspannung des Leuchtmittels (2) ist. Zum Anschluß des Leuchtmittels (2) an die Versorgungsspannung ist ein Spannungswandler (4) vorgesehen, der sich innerhalb des Gehäuses (1) oder in dessen unmittelbarer Nähe befindet. Ferner ist die Erfindung auf einen Spannungswandler (4) gerichtet, der eine Versorgungsspannung (3) pulsweise so an einen Verbraucher (2) anlegt, daß die dem Verbraucher (2) zugeführte Leistung im zeitlichen Mittel die Nennleistung des Verbrauchers (2) nicht überschreitet.

## Beschreibung

Die Erfindung betrifft einen Spannungswandler zum Anschluß eines elektrischen Verbrauchers, insbesondere eines Leuchtmittels, an eine Versorgungsspannung, die größer als die Nennspannung des Verbrauchers ist, sowie ein Flurförderzeug mit einer Gleichspannungsversorgung und zumindest einem in einem Gehäuse befindlichen elektrischen Leuchtmittel, wobei die Versorgungsspannung größer als die Nennspannung des Leuchtmittels ist, und welches einen Spannungswandler zum Anschluß des Leuchtmittels an die Versorgungsspannung aufweist. Zudem bezieht sich die Erfindung auf ein Verfahren zur Spannungsversorgung eines elektrischen Verbrauchers, insbesondere eines Leuchtmittels, wobei die Versorgungsspannung größer als die Nennspannung ist.

Halogenlampen haben sich aufgrund ihrer besonders hohen Lichtausbeute und ihrer hohen Lichtqualität in Scheinwerfern bewährt. Handelsübliche Halogenlampen besitzen in der Regel eine Nennspannung von 12 oder 24 V. Sollen Elektrogabelstapler mit einer Halogenbeleuchtung versehen werden, so ist es daher notwendig die Batteriespannung des Gabelstaplers von meist 48 oder 80 V mittels eines Spannungswandlers auf 12 oder 24 V zu transformieren. Es sind zwar auch 48 V und 80 V-Glühlampen erhältlich, diese sind jedoch aufgrund ihrer mangelnden Stoßfestigkeit für Gabelstapler bzw. allgemein für Flurförderzeuge ungeeignet.

Üblicherweise wird daher ein Spannungswandler eingesetzt, der neben der Versorgung des Scheinwerfers auch für andere Anwendungen genutzt wird. Derartige Spannungswandler sind mit einer sehr aufwendigen Regelung und einer Ausgangsstufe versehen. Dies ist notwendig, da für viele Anwendungen eine konstante Spannung bei unterschiedlichen Lasten gewährleistet werden muß.

Aufgabe vorliegender Erfindung ist es daher, einen Spannungswandler und ein entsprechendes Verfahren der eingangs genannten Art zu entwickeln, wobei der Spannungswandler im Vergleich zu den bekannten Wandlern weniger Bauteile aufweist und kleinere Abmessungen besitzt. Zudem soll ein Flurförderzeug der eingangs genannten Art so optimiert werden, daß der Bauraum für den Spannungswandler und das Leuchtmittel verringert wird.

Diese Aufgabe wird bezüglich des Spannungswandlers erfindungsgemäß dadurch gelöst, daß zwischen die Versorgungsspannung und den Verbraucher ein Taktgeber geschaltet ist, der die Versorgungsspannung pulsweise so an den Verbraucher anlegt, daß die dem Verbraucher zugeführte Leistung im zeitlichen Mittel die Nennleistung des Verbrauchers nicht überschreitet.

Verfahrensseitig besteht die Lösung der Aufgabe darin, die Versorgungsspannung in kurzen Pulsen an den Verbraucher anzulegen, so daß die dem Verbraucher zugeführte Leistung im zeitlichen Mittel die Nennleistung des Verbrauchers nicht überschreitet.

Die Erfindung nutzt die Eigenschaft vieler Verbraucher, kurzzeitig auch elektrische Leistungen, die über der Nennleistung des Verbrauchers liegen, auszuhalten. Es wird daher, im Gegensatz zu den bisher eingesetzten Spannungswandlern, nicht die Versorgungsspannung auf die Nennspannung des Verbrauchers heruntertransformiert, sondern die volle Versorgungsspannung in kurzen Pulsen an den Verbraucher angelegt. Während der Pulse wird zwar die Nennleistung des Verbrauchers überschritten, im zeitlichen Mittel, d.h. vom Beginn eines Pulses bis zum Beginn des nächsten Pulses, wird diese jedoch eingehalten. Eine Beschädigung des Verbrauchers kann so durch entsprechende Wahl der Pulsdauer und der Pulswiederholrate ausgeschlossen werden.

Die Erfindung ist insbesondere zum Anschluß eines elektrischen Leuchtmittels an eine Versorgungsspannung geeignet. Der Begriff elektrische Leuchtmittel bezieht sich auf alle Arten von Beleuchtungskörpern, die elektrische Energie aufnehmen und Licht abgeben, insbesondere Glühlampen, Glühbirnen und Halogenlampen. Beispielsweise können Glühbirnen aufgrund der Masse des Glühfadens und ihrer damit verbundenen Trägheit kurzzeitig deutlich höhere Leistungen als die im Dauerbetrieb erreichbare Nennleistung aushalten, ohne daß der Glühfaden durchbrennt.

Vorzugsweise sind die Länge und/oder die Wiederholrate der Pulse des Spannungswandlers veränderbar. Von Vorteil werden die Pulslänge und/oder die Pulswiederholrate an die Versorgungsspannung und den jeweiligen Verbraucher angepaßt. Dies erlaubt zum einen, den gleichen Verbraucher an unterschiedliche Versorgungsspannungen anzuschließen, zum anderen kann der Spannungswandler auf den Verbraucher optimiert werden.

Üblicherweise arbeiten getaktete Spannungswandler im Frequenzbereich von 10 bis 100 kHz. Es hat sich gezeigt, daß bei vielen Verbrauchern, insbesondere bei Leuchtmitteln wie Glühlampen, derart hohe Frequenzen nicht notwendig sind. Vorzugsweise beträgt daher die Wiederholrate der Pulse zwischen 100 und 1000 Hz, besonders bevorzugt zwischen 200 und 500 Hz liegt. Die Wahl dieses Frequenzbereichs hat den Vorteil, daß einerseits die elektromagnetischen Störungen und die dynamischen Verluste zu vernachlässigen sind, andererseits der Verbraucher aber aufgrund seiner Trägheit noch zufriedenstellend funktioniert, d.h. beispielsweise Glühbirnen noch nicht zu flackern beginnen.

Bei einigen Verbrauchern, insbesondere bei Leuchtmitteln, können kleine Schwankungen der an diese angelegten Spannung toleriert werden. Versorgt ein Spannungswandler lediglich derartige Verbraucher, so ist es von Vorteil, in dem Spannungswandler keine Mittel zur Glättung der an den Verbraucher angelegten Spannung vorzusehen. Die Spannungstransformation erfolgt bevorzugt ohne oder mit nur sehr einfacher ausgangsseitiger Spannungsglättung.

Bevorzugt werden die Höhe der Versorgungsspannung und/oder die Nennspannung des Verbrauchers festgestellt und das Puls-Pausen-Verhältnis des Taktgebers automatisch an die Höhe der Versorgungsspannung und die Nennspannung des Verbrauchers angepaßt. Auf diese Weise wird eine stufenlose, automatische Spannungserkennung erreicht, wodurch beispielsweise der gesamte Spannungsbereich von 24 bis 96 V für einen Verbraucher mit einer Nennspannung von 12 oder 24 V zulässig wird.

Von Vorteil werden die Pulslänge und/oder die Pulswiederholrate so eingestellt, daß dem Verbraucher beim Einschalten zunächst eine niedrigere Leistung zugeführt wird als im späteren Dauerbetrieb. Auf diese Weise wird eine Art Softstartverhalten für den Verbraucher realisiert. Die Pulslänge wird nach dem Einschalten langsam von Null bis auf die für die Nennleistung des Verbrauchers benötigte Dauer erhöht. Die Dauer dieses Einschaltvorgangs wird vorzugsweise über die Kapazität eines veränderbaren Kondensators eingestellt. Das langsame Hochfahren der dem Verbraucher zugeführten Leistung hat sich im Hinblick auf die Lebensdauer des Verbrauchers als sehr vorteilhaft erwiesen. Der Einschaltvorgang, d.h. die Zeit bis zum Erreichen der Nennleistung, beträgt vorzugsweise etwa eine Sekunde.

Als besonders günstig hat sich der Einsatz des erfindungsgemäßen Spannungswandlers bei der Versorgung eines in einem Gehäuse befindlichen elektrischen Leuchtmittels, z.B. einer Halogenlampe in einem Scheinwerfergehäuse, erwiesen. In diesem Fall ist es aus Platzgründen vorteilhaft, den Spannungswandler in das Gehäuse einzubauen, in dessen unmittelbarer Nähe anzuordnen oder an der Außenseite des Gehäuses anzubauen.

Als besonders günstig, da platzsparend, hat es sich erwiesen, den Spannungswandler direkt in das Leuchtmittel zu integrieren. Wird der Spannungswandler in den Sockel einer Glühbirne eingebaut, so kann diese Glühbirne in einem weiten Spannungsbereich von beispielsweise 12 bis 80 V eingesetzt werden.

Aus Sicherheitsgründen ist es zweckmäßig, nicht nur einen Spannungswandler für alle Verbraucher vorzusehen. Um beispielsweise einem Totalausfall der Beleuchtungsanlage eines Fahrzeugs vorzubeugen, ist es günstig, wenn mehrere Spannungswandler eingesetzt werden, von denen jeder nur einen Teil der Leuchtmittel versorgt. So ist es insbesondere sinnvoll, für jeden Hauptscheinwerfer der Beleuchtungsanlage jeweils einen eigenen Spannungswandler zu verwenden.

Die Erfindung bezieht sich auch auf ein Flurförderzeug, insbesondere einen Gabelstapler, mit einer Gleichspannungsversorgung und zumindest einem in einem Gehäuse befindlichen Leuchtmittel, wobei die Versorgungsspannung größer als die Nennspannung des Leuchtmittels ist, und mit einem Spannungswandler zum Anschluß des Leuchtmittels an die Versorgungsspannung.

Erfindungsgemäß wird der Bauraum für den Spannungswandler und das Leuchtmittel dadurch verringert, daß sich der Spannungswandler innerhalb des Gehäuses oder in dessen unmittelbarer Nähe befindet.

Aufgrund des erfindungsgemäßen Einbaus oder Anbaus in bzw. an das Gehäuse des Leuchtmittels werden nur sehr kurze Leitungen zwischen dem Spannungswandler und dem Leuchtmittel benötigt. Diese räumliche Nähe erlaubt es, auf eine ausgangsseitige Spannungsglättung am Spannungswandler zu verzichten. Vorzugsweise besitzt daher der Spannungswandler keine Mittel zur Glättung der an das Leuchtmittel angelegten Spannung. Diese sind bei der bekannten, räumlich weit beabstandeten Anordnung von Spannungswandler und Leuchtmittel notwendig, da sich bei langen Leitungen ohne Ausgangsfilterung zu große Störungen in den Leitungen aufbauen.

Von Vorteil wird das Gehäuse so ausgeführt, daß es als elektromagnetische Abschirmung wirkt. Weitere Maßnahmen gegen elektromagnetische Störungen direkt am Spannungswandler müssen somit nicht getroffen werden.

Die Erfindung ist insbesondere für Flurförderzeuge mit einer Versorgungsspannung von mehr als 24 V und für Leuchtmittel mit einer Nennspannung von 12 V oder 24 V geeignet.

Die Erfindung sowie weitere Einzelheiten der Erfindung werden im folgenden anhand von in den Zeichnungen dargestellten Ausführungsbeispielen näher erläutert. Hierbei zeigen:
Figur 1 einen Scheinwerfer mit integriertem Spannungswandler und
Figur 2 den schematischen Aufbau des erfindungsgemäßen Spannungswandlers.

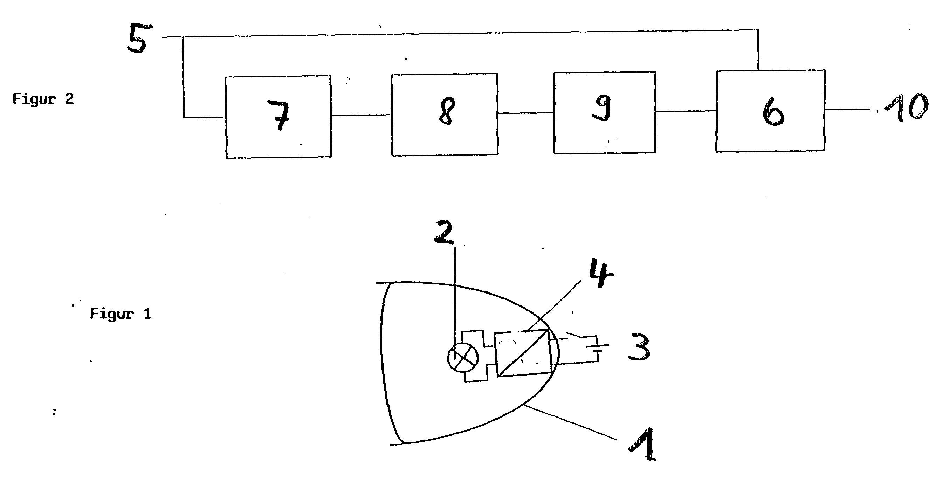

Figur 1 zeigt beispielhaft einen in einem Gabelstapler eingesetzten Hauptscheinwerfer 1. Die in diesem Scheinwerfer verwendete Halogenlampe 2 besitzt eine Nennspannung von 24 V. Die Batterie 3 des Gabelstaplers stellt dagegen eine Versorgungsspannung von 80 V zur Verfügung. Zur Transformation der Batteriespannung auf die Nennspannung der Lampe 2 ist deshalb ein Spannungswandler 4 vorgesehen.

Der Spannungswandler 4 ist in den Scheinwerfer 1 integriert, d.h. er befindet sich innerhalb des Gehäuses des Scheinwerfers 1. Da die Lampe 2 relativ unempfindlich gegen elektromagnetische Störungen, Gleichspannungschwankungen und Rauschen ist, besitzt der Spannungswandler 4 ausgangsseitig keine Filter oder sonstige Mittel zur Spannungsglättung. Der Verzicht auf eine Glättung der Ausgangsspannung wird durch die erfindungsgemäß möglichst kurze Verbindung zwischen der Halogenlampe 2 und dem Spannungswandler 4 ermöglicht.

Der Aufbau des Spannungswandlers 4 ist in Figur 2 schematisch dargestellt. Der Eingang 5 des Spannungswandlers 4 ist mit der Batterie 3 des Gabelstaplers verbunden. Am Eingang 5 liegt somit eine Gleichspannung von 80 V an. Die Eingangsspannung von 80 V wird zum einen direkt auf eine Endstufe 6, einen Leistungstransistor, gegeben, zum anderen über einen Spannungsteiler 7 und einen Dreiecksgenerator 8 auf einen Taktgeber 9 geschaltet. Der Taktgeber 9 gibt die von der Batterie 3 zur Verfügung gestellte Versorgungsspannung von 80 V pulsweise auf den Ausgang 10 des Spannungswandlers 4. Eine Glättung der Ausgangsspannung und eine galvanische Trennung sind nicht notwendig.

Die Spannung der Batterie 3 wird während kurzer Pulse von 1 ms Dauer bei einer Wiederholrate von 200 Hz an die Lampe 2 angelegt. Es hat sich gezeigt, daß handelsübliche Glühlampen und Halogenlampen auch bei 10-facher Nennleistung über 1 ms Dauer nicht durchbrennen, solange im zeitlichen Mittel des Puls-Pausen-Verhältnisses die Nennleistung eingehalten wird. Zur Steigerung der Lebensdauer der Lampe 2 wird die Pulslänge direkt nach dem Einschalten während etwa einer Sekunde langsam von Null bis auf 1 ms erhöht.

## Patentansprüche

1. Spannungswandler zum Anschluß eines elektrischen Verbrauchers, insbesondere eines Leuchtmittels, an eine Versorgungsspannung, die größer als die Nennspannung des Verbrauchers ist, **dadurch gekennzeichnet**, daß zwischen die Versorgungsspannung (3) und den Verbraucher (2) ein Taktgeber (4) geschaltet ist, der die Versorgungsspannung (3) pulsweise so an den Verbraucher (2) anlegt, daß die dem Verbraucher (2) zugeführte Leistung im zeitlichen Mittel die Nennleistung des Verbrauchers (2) nicht überschreitet.

2. Spannungswandler nach Anspruch 1, dadurch gekennzeichnet, daß die Länge und/oder die Wiederholrate der Pulse veränderbar sind.

3. Spannungswandler nach einem der Ansprüche 1 oder 2, dadurch gekennzeichnet, daß die Wiederholrate der Pulse zwischen 100 und 1000 Hz, vorzugsweise zwischen 200 und 500 Hz liegt.

4. Spannungswandler nach einem der Ansprüche 1 bis 3, dadurch gekennzeichnet, daß keine Mittel zur Glättung der an den Verbraucher (2) angelegten Spannung vorgesehen sind.

5. Spannungswandler für ein Leuchtmittel nach einem der Ansprüche 1 bis 4, dadurch gekennzeichnet, daß der Spannungswandler (4) in das Leuchtmittel (2) eingebaut ist.

6. Flurförderzeug, insbesondere einen Gabelstapler, mit einer Gleichspannungsversorgung und zumindest einem in einem Gehäuse befindlichen elektrischen Leuchtmittel, wobei die Versorgungsspannung größer als die Nennspannung des Leuchtmittels ist, und mit einem Spannungswandler zum Anschluß des Leuchtmittels an die Versorgungsspannung, insbesondere nach einem der Ansprüche 1 bis 5, **dadurch gekennzeichnet**, daß sich der Spannungswandler (4) innerhalb des Gehäuses (1) oder in dessen unmittelbarer Nähe befindet.

7. Flurförderzeug nach Anspruch 6, dadurch gekennzeichnet, daß das Gehäuse (1) als elektromagnetische Abschirmung ausgebildet ist.

8. Flurförderzeug nach einem der Ansprüche 6 oder 7, dadurch gekennzeichnet, daß die Versorgungsspannung des Flurförderzeugs mehr als 12 V beträgt.

9. Flurförderzeug nach einem der Ansprüche 6 bis 8, dadurch gekennzeichnet, daß die Nennspannung des Leuchtmittels 12 V oder 24 V beträgt.

10. Verfahren zur Spannungsversorgung eines elektrischen Verbrauchers, insbesondere eines Leuchtmittels, wobei die Versorgungsspannung größer als die Nennspannung ist, **dadurch gekennzeichnet**, daß die Versorgungsspannung in kurzen Pulsen an den Verbraucher (2) angelegt wird, so daß die dem Verbraucher (2) zugeführte Leistung im zeitlichen Mittel die Nennleistung des Verbrauchers (2) nicht überschreitet.

11. Verfahren nach Anspruch 10, dadurch gekennzeichnet, daß die Wiederholrate der Pulse zwischen 100 und 1000 Hz, vorzugsweise zwischen 200 und 500 Hz liegt.

12. Verfahren nach einem der Ansprüche 10 oder 11 zur Spannungsversorgung eines Verbrauchers (2) mit einer Nennspannung von 12 oder 24 V.

13. Verfahren nach einem der Ansprüche 10 bis 12 zur Spannungsversorgung eines elektrischen Leuchtmittels (2) in einem Flurförderzeug.

14. Verfahren zur Spannungsversorgung eines in einem Gehäuse befindlichen elektrischen Leuchtmittels nach einem der Ansprüche 10 bis 13, dadurch gekennzeichnet, daß sich der Spannungswandler (4) innerhalb des Gehäuses (1) oder in dessen unmittelbarer Nähe befindet.

15. Verfahren nach einem der Ansprüche 10 bis 14, dadurch gekennzeichnet, daß die Höhe der Versorgungsspannung und/oder der Nennspannung festgestellt und die Länge und/oder Wiederholrate der Pulse automatisch an die Höhe der Versorgungsspannung und der Nennspannung angepaßt werden.

16. Verfahren nach einem der Ansprüche 10 bis 15, dadurch gekennzeichnet, daß die Länge und/oder die Wiederholrate der Pulse so eingestellt werden, daß dem Verbraucher (2) beim Einschalten eine niedrigere Leistung zugeführt wird als im Dauerbetrieb.
